(19) Europäisches Patentamt
European Patent Office
Office européen des brevets

(11) **EP 2 367 117 A1**

## (12) EUROPEAN PATENT APPLICATION

(43) Date of publication:
**21.09.2011 Bulletin 2011/38**

(51) Int Cl.:
*G06F 15/78* (2006.01)    *H04L 12/56* (2006.01)

(21) Application number: **10156145.4**

(22) Date of filing: **10.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Panasonic Corporation**
**Kadoma-shi**
**Osaka 571-8501 (JP)**

(72) Inventor: **Deeley, Simon**
**Temple Quay, Bristol BS1 6EA (GB)**

(74) Representative: **Haley, Stephen**
**Gill Jennings & Every LLP**
**The Broadgate Tower**
**20 Primrose Street**
**London EC2A 2ES (GB)**

(54) **Heterogeneous routing network**

(57)    A router, and a routing network which comprises regions of different bit width, each having a plurality of routing units. The router comprises extracting means arranged to extract at least one model of an n-bit wide routing unit from a plurality of m-bit wide routing units, where n and m are positive integers and n is larger than m, calculating means arranged to calculate the routes using a known routing algorithm, converting means arranged to convert the calculated routes into a set of instructions using the models extracted in the extracting step and sending means arranged to send the instructions to the m-bit wide routing units.

FIGURE 16

EP 2 367 117 A1

**Description**

The present invention relates to the field of user programmable logic devices (PLDs). More specifically, the present invention is directed to a routing network for a user programmable logic device and a method of routing in a user programmable logic device.

Reconfigurable devices/fabrics, such as D-Fabrix (disclosed in, for example, US6353841 and US2002/0157066) are commonly made up of a plurality of interconnected user programmable logic blocks or tiles, the fundamental building blocks of the system.

The tiles can be combined and configured to produce large and complex functional units having various bit widths. In order to efficiently connect these functional units of different width, it is necessary to have a routing network which supports these different widths. These varying widths pose a significant problem to known routing algorithms.

Existing routing algorithms (e.g. Pathfinder®) use an iterative approach where routing resources such as wires and switches are assigned a cost related to delay and desirability. Routes are selected for all point-to-point links while observing the costs of resources and measure of the importance of the point-to-point link being created. On any given iteration, a resource may be used more than once in such a way that electrical contention would occur and the signals would not be transmitted across the routing network as desired— this is known as congestion. The cost of congested resources is increased to encourage the least important of the links to find an alternative route. This process is repeated until a set of routes that exhibit no congestion are found.

The convergence of the algorithm relies on the fact that there are many possible alternative routes to make each connection and that the route chosen for one link is unrelated to routes chosen for other links except by congestion.

In a multi-bit architecture where closing one switch results in other switches also being closed, as described in US6252792, it is common practice to route the multiple bits of a source to the multiple bits of a sink concurrently. If this were not done, then it may be possible to create many congestions that could only be resolved if the route for one of the bits happens to be congruent with the route chosen for another bit. This approach would tend not to converge, because having chosen the route for one bit, only one of the many alternative routes for another bit can result in a solution containing no congestion.

For example the case of routing from a source in a first n-bit wide region, through a n/2-bit wide narrow region, to a sink in a second n-bit wide region that is not reachable from the first, when the wide route extends into the narrow region, it bifurcates into two narrow routes. When the two narrow routes leave the narrow region, they must converge at the point of exit. If they do not converge at that point, then they will not converge in the second n-bit wide region without causing congestion. This is a significant problem with prior art systems.

Accordingly, there is a need for a system and method which allow efficient routing over a routing network comprising different regions of varying bit width.

In order to solve the problems associated with the prior art, the present invention provides a routing network which comprises:

routing regions of different bit-widths, each region having at least one border section, each border section having a specific number of bits per unit length, the regions arranged such that the number of bits per unit length at adjacent border sections of adjacent regions is equal; and

mediator units positioned between adjacent border sections of regions having different widths, the mediator units being arranged to connect the bits of one region to the bits of another region.

All the routing regions can be situated on a single routing plane.

Alternatively, all the routing regions of different width can be located on different routing planes.

Preferably, the widths of the routing regions have at least two common multiplying factors.

The present invention also provides a method of routing in a routing network, the routing network comprising regions of different bit width, each region comprising a plurality of routing units, the method comprises the steps of:

extracting at least one model of an n-bit wide routing unit from a plurality of m-bit wide routing units, where n and m are positive integers and n is larger than m; calculating the routes using a known routing algorithm;

converting the calculated routes into a set of instructions using the models extracted in the extracting step; and

sending the instructions to the m-bit wide routing units.

Preferably, n is a multiple of m.

All the regions can be laid out in a single routing plane.

Preferably, the extracting and the converting steps are performed recursively such that high level models can be extracted from sets of lower level models, and low level routing units can be controlled using instructions created for higher level models.

The present invention also provides a router for routing in a routing network, the routing network comprising regions of different bit width, each region comprising a plurality of routing units, the router comprises:

extracting means arranged to extract at least one model of an n-bit wide routing unit from a plurality of m-bit wide routing units, where n and m are positive integers and n is larger than m;
calculating means arranged to calculate the routes using a known routing algorithm;
converting means arranged to convert the calculated routes into a set of instructions using the models extracted in the extracting step; and
sending means arranged to send the instructions to the m-bit wide routing units.

Preferably, n is a multiple of m.

All the regions can be laid out in a single routing plane.

Preferably, the extracting means and the converting means are further arranged to recursively extract models and convert models into instructions, such that high level models can be extracted from sets of lower level models, and low level routing units can be controlled using instructions created for higher level models.

The present invention also provides a method of building a routing network having regions of different bit-widths, each region having at least one border section, each border section having a specific number of bits per unit length, the method comprises the steps of:

    providing a plurality of regions arranged such that the number of bits per unit length at the adjacent border sections of adjacent regions is equal; and
    providing mediator units between common border sections of regions having different widths, the mediator units being arrange to connect the bits of one region to the bits of another region.

The step of providing a plurality of routing regions can comprise the steps of:

    providing all of the routing regions on a single plane.

Alternatively, the step of providing a plurality of routing regions can comprise the steps of:

    providing routing regions of different width on different planes.

As will be appreciated, the present invention provides several advantages over the prior art. For example, because the present invention models the narrow region as if it were a wide routing region, every route through the region will result in correct convergence at the point of exit. Routing is therefore performed on the model and the result translated back to the actual features of the narrow network. This, in turn, allows known routing algorithms to be applied to routing networks containing regions of varying widths. In networks of varying widths in which a full width route was available (for example by skirting around a narrow region), the present invention allows alternative routes that use narrow regions if the route is shorter or if its use aids in resolving congestions.

Embodiments of the present invention will now be described with reference to the accompanying drawings, in which:

    Figure 1 represents a functional diagram of a simplified n-bit routing unit in accordance with the present invention;
    Figure 2 represents a functional diagram of a simplified n-bit routing unit in which the choice of connection is limited by an internal hierarchy;
    Figure 3 represents a functional diagram of a routing network comprising an interconnected plurality of the n-bit switching units of Figure 1;
    Figure 4 is a table showing the naming convention used in the description and figures;
    Figure 5 represents a mediator unit in accordance with the present invention;
    Figure 6 represents another mediator unit in accordance with the present invention;
    Figure 7 represents a functional diagram showing the functional equivalence of a model constructed in accordance with the present invention;
    Figure 8 represents a functional diagram showing the functional equivalence of a model constructed in accordance with the present invention;
    Figure 9 represents a functional diagram showing the functional equivalence of a model constructed in accordance with the present invention;
    Figure 10 represents a functional diagram showing the functional equivalence of a model constructed in accordance with the present invention;
    Figure 11 represents a model of a n-bit routing unit mapped on an array of n/2 bit routing units;
    Figure 12 is a diagram showing the Cartesian labeling of the sides of a routing unit;
    Figure 13 is a diagram showing how the functional equivalence shown in Figure 7 is arrived at;
    Figure 14 represents a functional diagram of a routing network comprising an n-bit wide switching section and an n/2-bit wide switching section;
    Figure 15 represents a functional diagram of a routing network comprising an n-bit wide section, an n/2-bit wide section and an n/4-bit wide section; and
    Figure 16 represents a functional diagram of a routing network comprising an n-bit wide switching section, an n/2-bit wide switching section and a n/4-bit wide switching section.

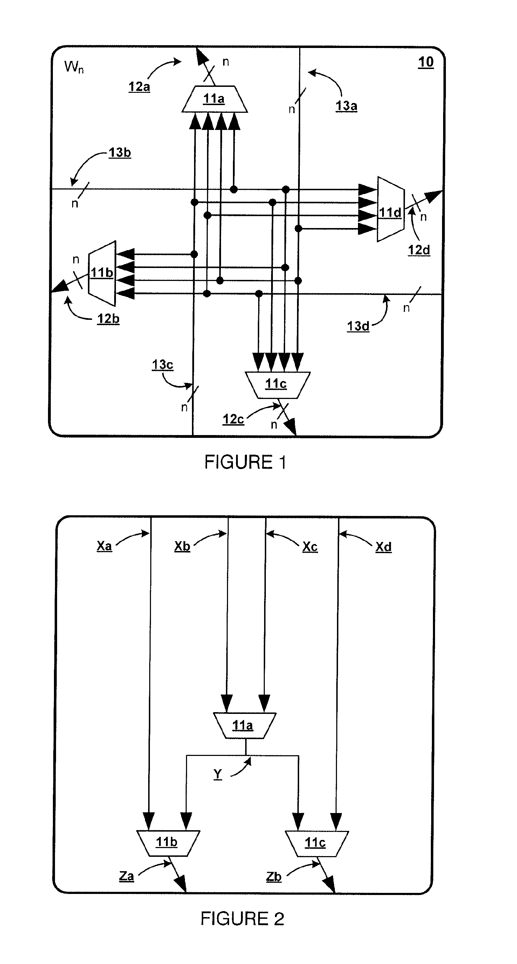

Figure 1 represents a simplified functional diagram of an n-bit wide switching unit 10 in accordance with the present invention, where n is a positive integer representing a specific number of bits. The switching unit 10 comprises four inputs 13a, 13b, 13c, 13d, four outputs 12a, 12b, 12c, 12d and four n-bit switching means 11 a, 11 b, 11 c, 11 d. In this example, the n-bit switching means 11 a, 11 b, 11 c, 11 d are multiplexers, though other switching means have been contemplated. As can be seen from the interconnectivity of the switching unit 10 of Figure 1, by correctly configuring the switching means 11 a, 11 b, 11 c, 11 d, it is possible to route any n-bit input 13a, 13b, 13c, 13d to any n-bit output 12a, 12b, 12c, 12d.

Figure 2 shows an alternative routing unit arrangement in which not all connections from inputs X to outputs Z are possible. For example, there is no way to connect input Xa to output Zb. Moreover, the connection to one output may prevent the implementation of a possible connection at the other. For example, it is possible to independently connect input Xb to output Za and input Xc to output Zb, however if input Xb is connected to output Za, then it is not possible to simultaneously connect input Xc to output Zb as this would require internal bus Y to be simultaneously connected to both Xb and Xc.

Practical routing networks have many such constraints and interdependencies, however for the purpose of explaining the present invention, one skilled in the art will appreciate that these complexities may be safely disregarded.

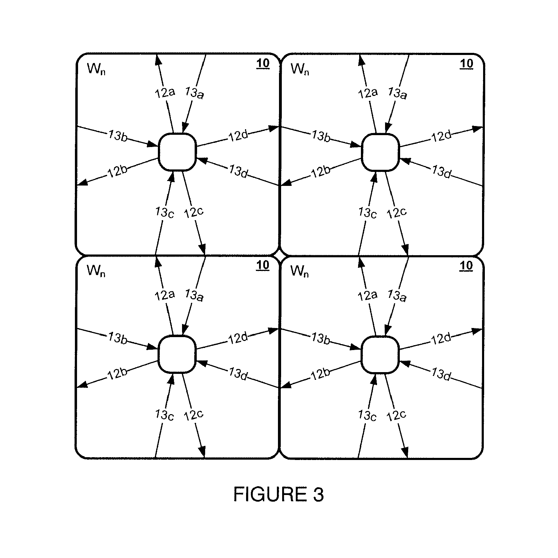

Figure 3 represents a functional diagram of a routing network comprising an interconnected plurality of the n-bit switching units of Figure 1. The representation of the switching units 10 of Figure 1 has been simplified for clarity. As will be appreciated however, each of the switching units 10 of Figure 2 comprises all of the functionality of the switching unit 10 of Figure 1. By interconnecting the n-bit switching units 10 of Figure 1, it is possible to form a n-bit routing network where any of the n-bit inputs 13a, 13b, 13c, 13d can easily be routed to any of the n-bit outputs 12a, 12b, 12c, 12d.

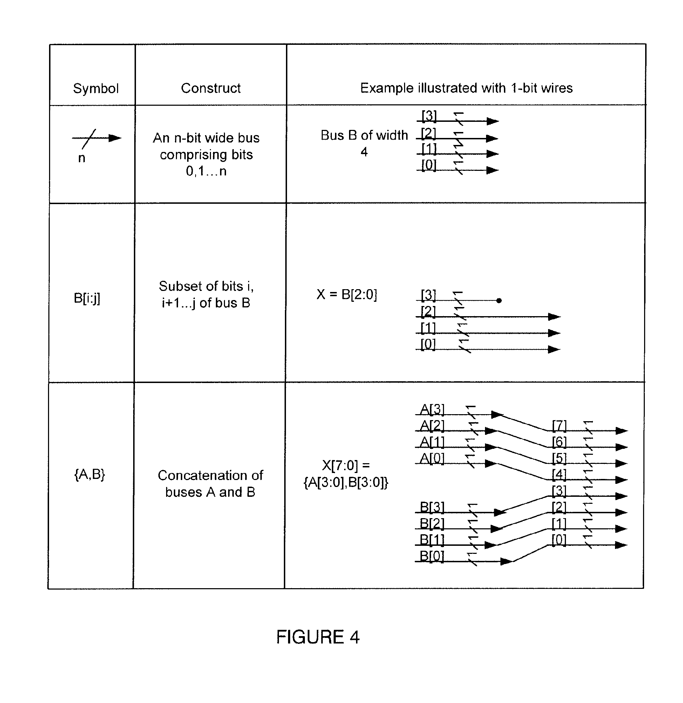

Figure 4 is a table showing the naming convention used in the description and figures. As can be seen, the use of square brackets represents a subset of bits on a particular bus. For example, if bus $B_4$ comprises 4 bits, $B_4[0]$ represents the least significant bit, $B_4[3]$ represents the most significant bit. Similarly, the subset $B_4[2:0]$ represents the subset of the three least significant bits and subset $B_4[3:1]$ represents the subset of the three most significant bits.

For a bus which is n-bits wide, $B_n[0]$ represents the least significant bit, $B_n[n-1]$ the most significant bit. Similarly, the subset $B_n[n-2:0]$ represents the subset of the n-1 least significant bits and subset $B_n[n-1:1]$ represents the subset of the n-1 most significant bits.

As can also been seen in Figure 4, the use of braces represents the concatenation of bits. For example, a bus $B_7$ comprising 7 bits can be assembled by the concatenation of the three least significant bits of a 9-bit wide bus Bg and the centre four center bits of a 6-bit wide bus $B_6$. Such a concatenation would be represented as follows:

$$B_7 = \{B_9[2:0], B_6[4:1]\}$$

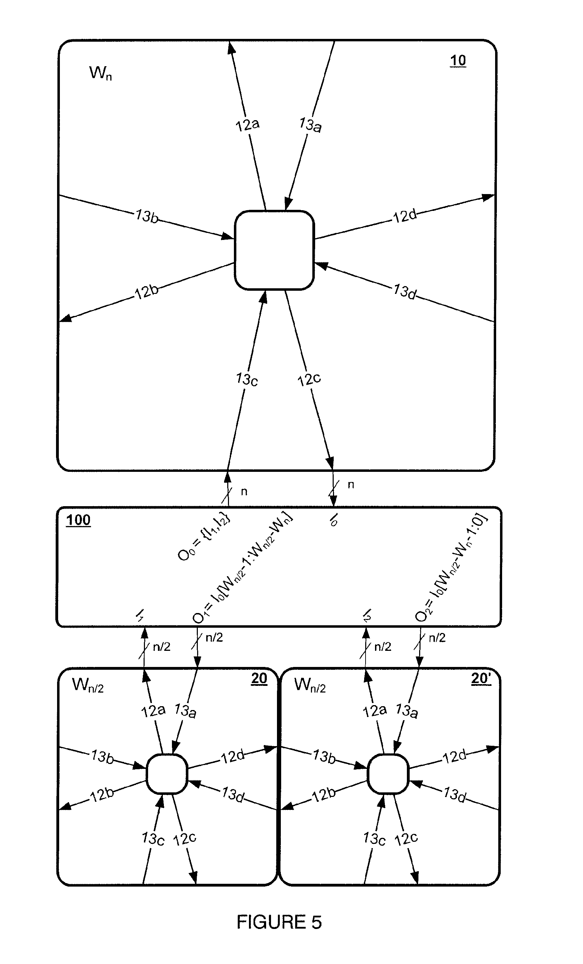

Figure 5 represents a mediator unit 100 in accordance with the present invention. In order to interface between an n-bit routing region 10 and an n/2 bit routing region, it is necessary to use a mediator unit 100, such as that shown in Figure 5. The mediator unit is used to connect adjacent border sections of the n-bit routing region and n/2-bit routing region. As will be appreciated, in this disclosure, the concept of "adjacency" is determined by the presence of connections between two elements, rather than by the physical proximity of those two elements. Thus, it will be appreciated that two adjacent border sections can be physically located on different routing planes, as will be described below.

The mediator unit 100 can comprise a plurality of hardwired connections created during the manufacturing process, though other arrangements could also be possible. For the purposes of simplifying the understanding of the invention, the mediator 100 of the present embodiment can be considered as a simple set of hardwired connections.

The mediator 100 of Figure 5 comprises three inputs $I_0$, $I_1$, $I_2$ and three outputs $O_0$, $O_1$, O2. The first input $I_0$ is connected to the output 12c of the n-bit switching unit 10, the second input $I_1$ is connected to the output 12a of one of the n/2-bit switching units 20 and the third input $I_2$ is connected to the output 12a of the other of the n/2-bit switching units 20.

The first output $O_0$ is connected to input 13c of routing region 10 and is formed by the concatenation of the second input $I_1$ and the third input $I_2$, represented by $O_0 = \{I_1, I_2\}$. The second output $O_1$ is connected to the first input $I_0$ and is formed from a subset of the n-n/2 least significant bits of the first input $I_0$, represented by $O_2 = I_0[W_{n/2n}-W_n-1:0]$. Finally, the third output $O_2$ is connected to the first input $I_0$ and is formed from a subset of the n-n/2 most significant bits of the first input $I_0$, represented by $O_1 = I_0[W_{n/2}-1:W_{n/2}-W_n]$

Accordingly, the mediator unit 100 shown in Figure 5 efficiently connects n-bit switching unit 10 to two n/2-bit switching units 20.

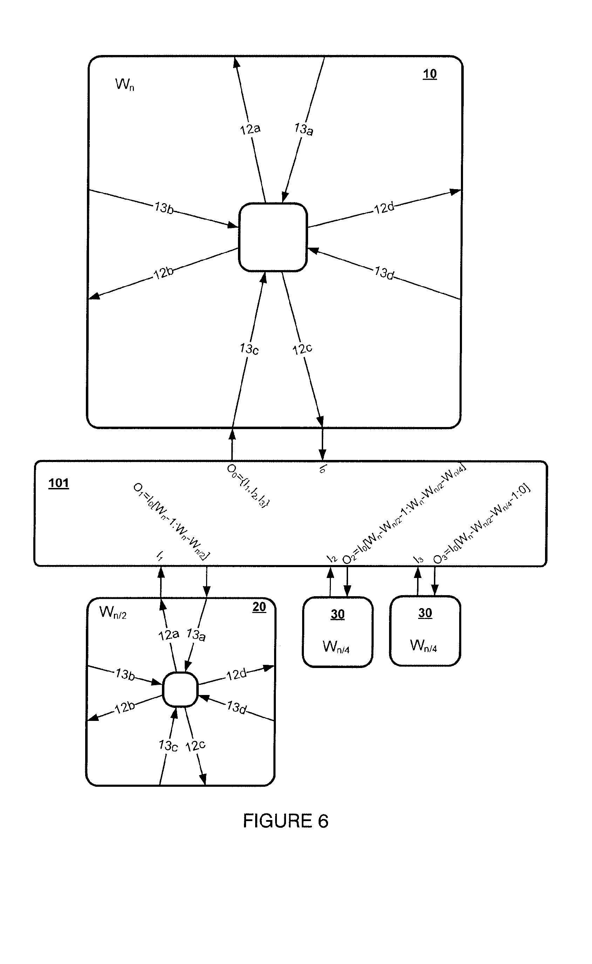

Figure 6 represents another mediator unit 101 in accordance with the present invention. In order to interface between an n-bit routing unit 10, an n/2 bit routing unit 20, and two n/4 routing units 30, it is necessary to use a mediator unit 101, such as that shown in Figure 6.

The mediator 101 of Figure 6 comprises four inputs $I_0$, $I_1$ $I_2$, $I_3$ and four outputs $O_0$, $O_1$, $O_2$, $O_3$. The first input $I_0$ is connected to the output 12c of the n-bit routing unit 10, the second input $I_1$ is connected to the output 12a of the n/2-bit routing unit 20, the third input $I_2$ is connected to the output 12a of one of the n/4-bit routing units 30 and the fourth input $I_3$ is connected to the output 12a of the other of the n/4-bit switching units 30.

The first output $O_0$ is connected to input 13c of n-bit routing unit 10 and is formed by the concatenation of the second input $I_1$, the third input $I_2$ and the fourth input $I_3$, and is represented by $O_0 = \{I_1, I_2, I_3\}$. The second output $O_1$ is connected to the first input $I_0$ and is formed from a subset of the n-n/2 most significant bits of the first

input $I_0$, represented by $O_1 = I_0[W_n-1:W_n-W_{n/2}]$. The third output $O_2$ is connected to the first input $I_0$ and is formed from a subset of the bits of the first input $I_0$, represented by $O_2 = I_0[W_n-W_{n/2}-1:W_n-W_{n/2}-W_{n/4}]$ Finally, the fourth output $O_3$ is connected to the first input $I_0$ and is formed from a subset of the bits of the first input $I_0$, represented by $O_3 = I_0[W_n-W_{n/2}-W_{n/4}-1:0]$. Accordingly, the mediator 101 shown in Figure 6 efficiently connects an n-bit routing region to an n/2-bit routing region and two n/4 bit routing regions.

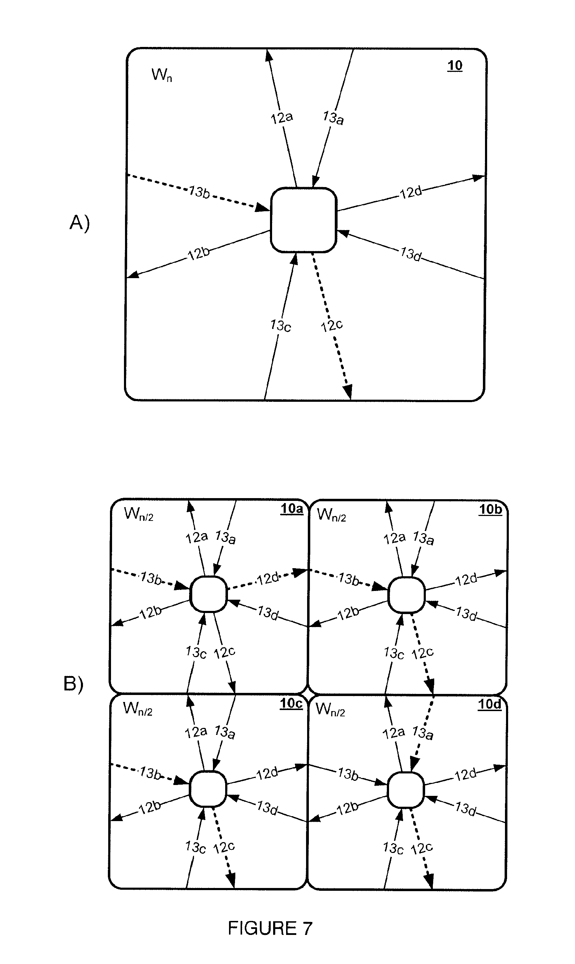

Figure 7 shows how a plurality of n/2-bit routing units 10a, 10b, 10c, 10d can be modelled as a n-bit routing unit 10. Figure 7A shows an n bit signal being routed from input 13b to output 12c. As can be seen from Figure 7B, a routing operation where a signal enters input 13b and exits output 12c can be mapped on a group of four n/2-bit routing units 10a, 10b, 10c, 10d. Routing unit 10a routes input 13b to output 12d, routing unit 10b routes input 13b to output 12c, routing unit 10c routes input 13b to output 12c and, finally, routing unit 10d routes input 13a to output 12c. As will be appreciated, if the n/2-bit signals output from routing units 10c and 12d are to be input to an n-bit routing unit 10, these signals will need to be concatenated using a mediator, as described above.

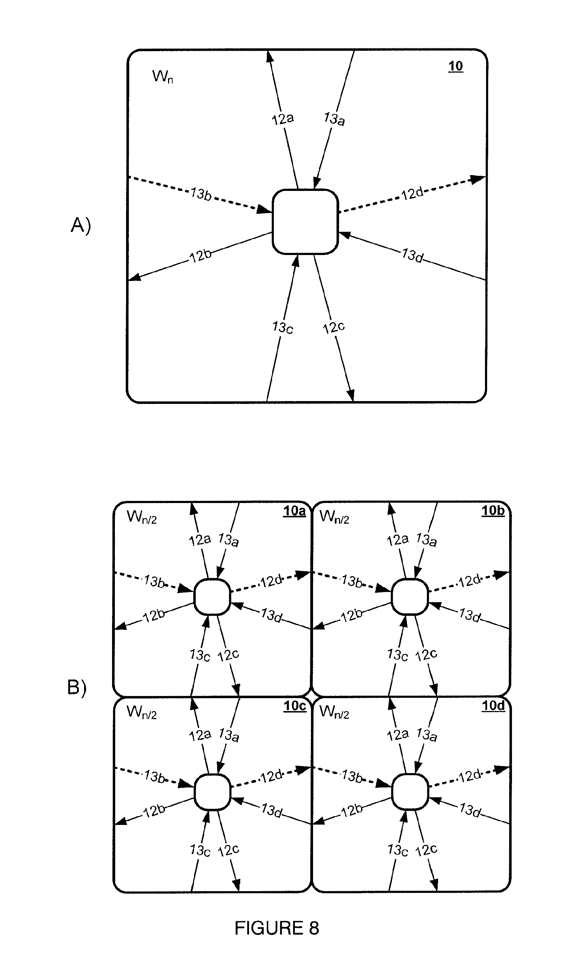

Figure 8 also shows how a plurality of n/2-bit routing units 10a, 10b, 10c, 10d can be modelled as a n-bit routing unit 10. Figure 8A shows an n bit signal being routed from input 13b to output 12d. As can be seen from Figure 8B, a routing operation where a signal enters input 13b and exits output 12d can be mapped on a group of four n/2-bit routing units 10a, 10b, 10c, 10d. Routing unit 10a routes input 13b to output 12d, routing unit 10b routes input 13b to output 12d, routing unit 10c routes input 13b to output 12d and, finally, routing unit 10d routes input 13b to output 12d.

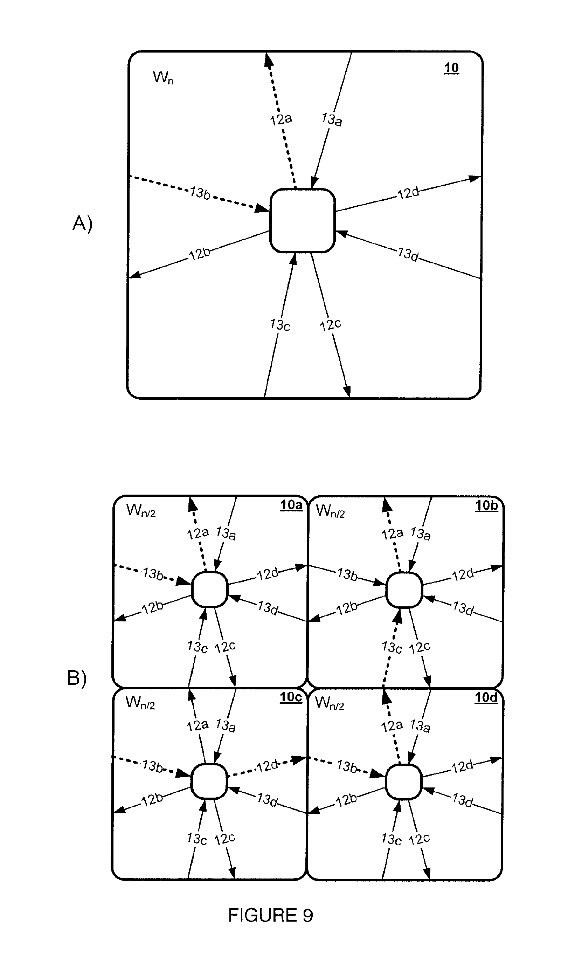

Figure 9 also shows how a plurality of n/2-bit routing units 10a, 10b, 10c, 10d can be modelled as a n-bit routing unit 10. Figure 9A shows an n bit signal being routed from input 13b to output 12a. As can be seen from Figure 9B, a routing operation where a signal enters input 13b and exits output 12a can be mapped on a group of four n/2-bit routing units 10a, 10b, 10c, 10d. Routing unit 10a routes input 13b to output 12a, routing unit 10b routes input 13c to output 12a, routing unit 10c routes input 13b to output 12d and, finally, routing unit 10d routes input 13b to output 12a.

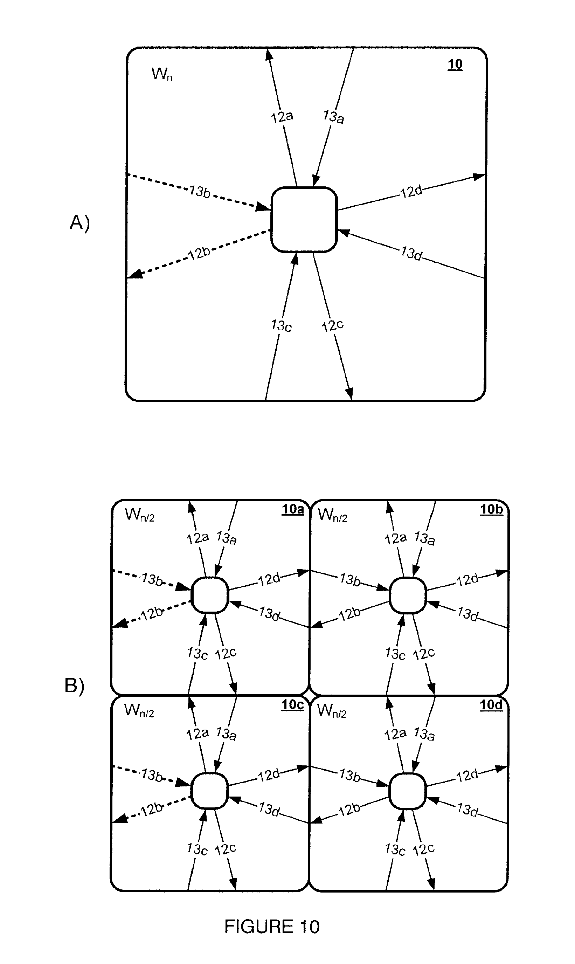

Figure 10 also shows how a plurality of n/2-bit routing units 10a, 10b, 10c, 10d can be modelled as a n-bit routing unit 10. Figure 10A shows an n bit signal being routed from input 13b to output 12b. As can be seen from Figure 10B, a routing operation where a signal enters input 13b and exits output 12b can be mapped on a group of four n/2-bit routing units 10a, 10b, 10c, 10d. Routing unit 10a routes input 13b to output 12b and routing unit 10c routes input 13b to output 12b.

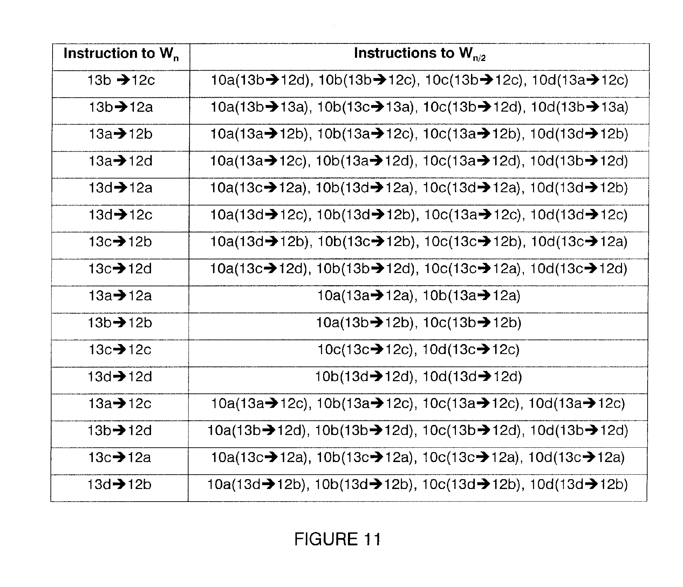

A full representation of the model set out in Figures 7 to 10 can be seen in Figure 11, where the left-hand column represents instructions which will be received by an n-bit model comprising a collection of routing units 10a, 10b, 10c, 10d of width n/2. For example, route input 13b to output 12c (represented by "13b→12c"). The right-hand column represents the instructions which will be received by each individual routing unit 10a, 10b, 10c, 10d (or recursive model) in the array. For example, if it is required to route input 13b to output 12c (in terms of the n-bit model), routing unit 10a will receive an instruction to route input 13b to output 12d (represented by "10a (13b→12d)"), routing unit 10b will receive an instruction to route input 13b to output 12c (represented by "10b (13b→12c)"), routing unit 10c will receive an instruction to route input 13b to output 12c (represented by "10c (13b→12c)") and routing unit 10d will receive an instruction to route input 13a to output 12c (represented by "10d (13a→12c)"). Accordingly, by using the model shown in Figure 11, all of the functionality of the n-bit routing unit 10 can be mapped onto an array of four n/2-bit routing units 10a, 10b, 10c, 10d. As can also be seen from Figure 11, there are sixteen possible routing operations, including eight right-angled turns (e.g. 13b→12c), four straight connections (e.g. 13a→12c) and four U-turn, or loopback, connections (e.g. 13a→12a).

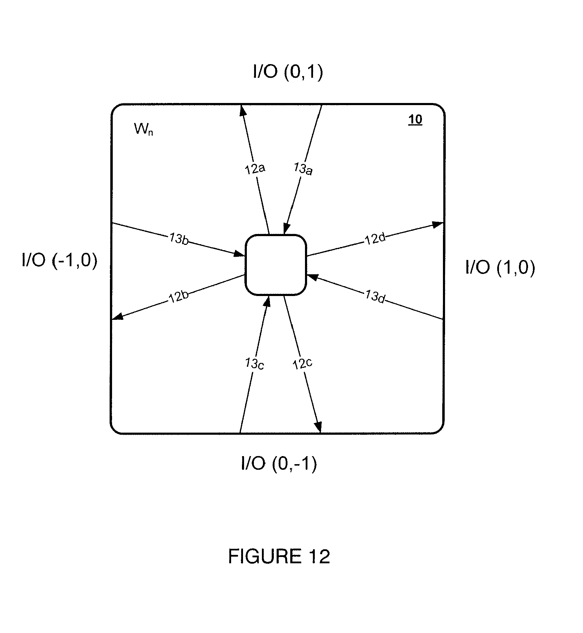

With reference to Figures 11 to 13, a method of creating a model in accordance with one embodiment of the present invention will now be described. In order to facilitate understanding of the method, each side of routing unit 10 can be labelled with an input/output coordinate. In Figure 12, the side of the routing unit 10 comprising input 13a and output 12a is represented by I/O (0,1), the side of the routing unit 10 comprising input 13b and output 12b is represented by I/O (1,0), the side of the routing unit 10 comprising input 13c and output 12c is represented by I/O (0,-1) and the side of the routing unit 10 comprising input 13d and output 12d is represented by I/O (1,0).

In order to create the model shown in Figure 11, it is necessary to perform three distinct methods, one for each of the group right-angled turn, the group of straight connections and the group of U-turn or loopback connections.

In order to implement the straight connections, an instruction for straight connections from I/O(x,y) to I/O (-x,-y) must be created for each routing unit 10a, 10b, 10c and 10d and for each route from I/O(x,y) to I/O(-x,-y). This process can be described using the following pseudo-do-code for the array of shown in Figure 7 to 10.

*For each route I/O(x,y) →I/O(-x,-y) where (x,y) in [(0,1),(0-1),(1,0),(1,0)]*
*For each unit (10x), where x in [a,b,c,d]*
*Use instruction I/O(xy) →I/O(-x,-y)*

In order to implement the U-turn connections, an instruction for a U-turn connection must be generated on all routing units 10 which are on the side from which a signal is to be received. To do this, the relevant routing units are geometrically identified and configured to perform a U-turn connection, as described above. In order to label the location of each routing unit 10a, 10b, 10c, 10d, it is possible to use Cartesian labels, such that routing unit 10a can be found at location (-1,1), routing unit 10b can be found at location (1,1), routing unit 10c can be found at location (-1,-1) and routing unit 10d can be found at location (1,-1). This process of implementing the U-turn connections can then be described using the following pseudo-code for an array comprising t routing units.

*For each route I/O(x,y) →I/O(x,y) where (x,y) in [(0, 1),(0-1),(1,0),(-1,0)]*
*For each routing unit 10 location (i,j) in [(1,1),(-1,1),(1,-1),(1,-1)]*
*if i == x or j ==y: use instruction I/O(x,y) →I/O(x,y)*

Finally, in order to implement the right-turn connections, each right turn connection must first be associated with a diagonal line of routing units 10.

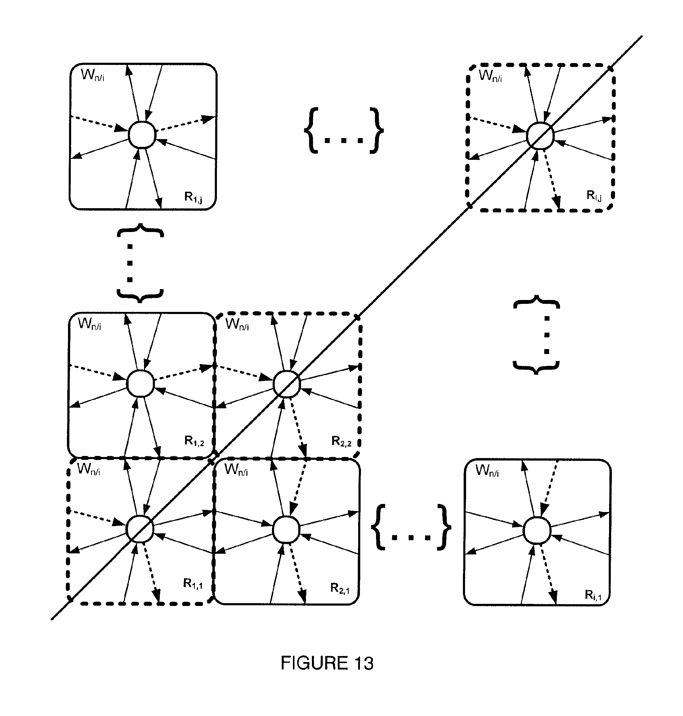

As shown in Figure 13, the diagonal line of routing units 10 stretches from the corner formed by the junction of the input and the output sides of the array, to the corner which is diagonally opposite in the array.

Once the diagonal line is identified, each routing unit 10 in the array is grouped in one of the following three categories: routings units 10 which form the diagonal (shown in Figure 13 as having broken borders, $R_{1,1}$, $R_{2,2}$ to $R_{i,j}$) routing units 10 which are on the input side of the diagonal (e.g. $R_{1,2}$), and routing units 10 which are on the output side of the diagonal (e.g. $R_{2,1}$). Then, in order to route an n-bit signal from I/O($x_i$,$y_i$) to I/O($y_o$,x) on an array of n/i-bit routing units 10, each group will need to be configured differently.

First, for all routing units 10 on the input side of the diagonal, a straight connection will be made from I/O($x_i$, $y_j$ to I/O(-$x_i$,-$y_i$). Then, for all routing units 10 on the output side of the diagonal, a straight connection is made from I/O(-$y_o$,-$x_o$) to I/O($y_o$,$x_o$).

Finally, for all routing units 10 which are along the diagonal, a connection is made from I/O($x_i$,$y_i$) to I/O($y_o$,$x_o$). This process can be described using the following pseudo-code.

*Let routes = [(1,0,0,-1),(1,0,0,1), (0,1,-1,0),(0,1,1,0), (1,0,0,-1), (1,0,0,1), (0,-1,-1,0), (0,-1,1,0)]*
*For each route I/O($x_i$y) →I/O(xo,yj where ($x_i$,$y_i$,$x_o$,$y_o$ in routes*
*For each routing unit 10 u*

    *if u is on input side of diagonal:*

        *use instruction I/O(x,,y) →I/O(-$x_i$,-$y_i$)*

    *if u is on output side of diagonal:*

        *use instruction I/O(xo,-yo →I/O($x_o$,$y_o$*

    *if u is on diagonal:*

        *use instruction I/O($x_i$,$y_i$) -I/O($x_o$,$y_o$*

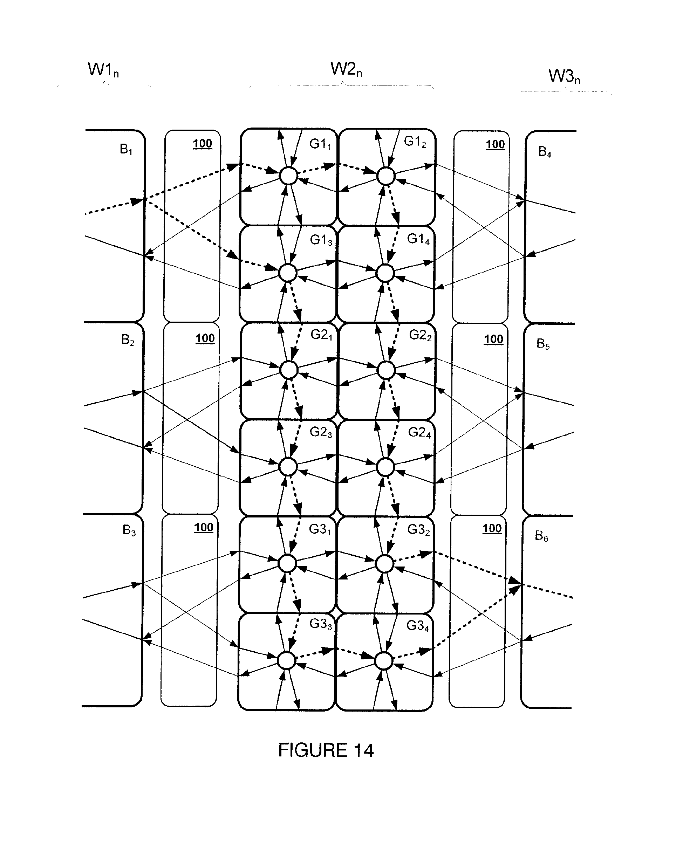

In reference to Figure 14, a practical example of how a routing network in accordance with the present invention operates will now be described. Figure 14 shows a first n-bit wide routing area W1n, a n/2-bit wide area W2n and a second n-bit wide area W3n. In order to route a signal from routing unit B, to routing unit $B_6$, it is necessary to route the signal through the W2n area, as shown in Figure 14

To do this, three groups G1, G2, G3 of n/2-bit routing units will be identified. Once identified, each group will be modeled as n-bit wide routing network in accordance with the method described above. Finally, each group can be treated by the router as an n-bit wide routing unit. The router then selects a route through the n-bit models which is converted to instructions for the n/2 bit routing units as shown by the dotted arrows. As will be appreciated, the different routing regions on any of the embodiments of the present invention need not be laid out in a single plane. For example, the switching means of multiple regions of different widths can be intermingled within the same physical area. The intermingled regions can be considered to be in different planes stacked in the same physical location. Mediator units are then used to connect between routing units on adjacent planes in the stack.

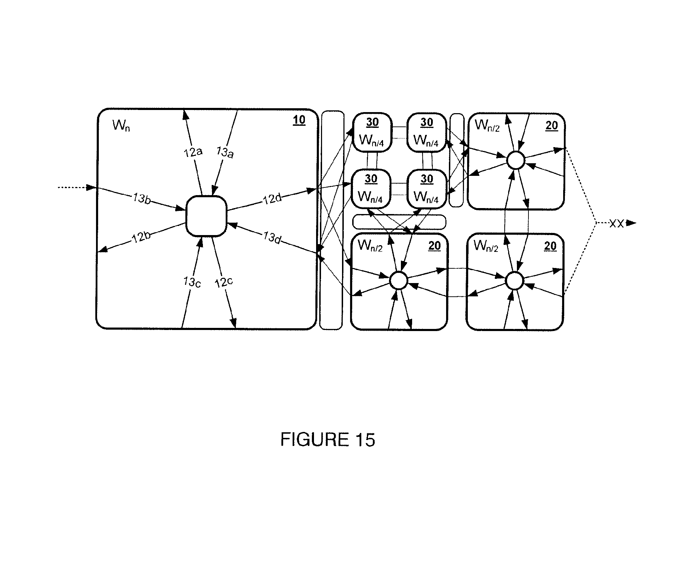

Now, with reference to Figures 1 and 15, the way in which the various routing units in a model can be controlled will now be described.

With reference to Figure 1, the input selected by each switching means 11 x is controlled by a number of control signals. The control signal may come from a memory or register, but other circuits or devices are also possible. For example, each switching means 11 x could be controlled by the outputs of two memory bits.

In a network such as that shown in Figure 15, if each of the switching means 11x within routing units 10, 20 and 30 has two associated memory bits, each of the routing units 10, 20 and 30 has eight memory bits. 64 memory bits would be required in total to control the network in the figure.

A $W_n$-bit model of the network in the figure would comprise two routing unit models 10 and 10', where 10' is the $W_n$-bit model of the region comprising routing units 20 and 30. Routing model 10' comprises four routing-unit models 20 and 20', where 20' is the $W_n$/2model of the region of routing units 30.

In the case where a $W_n$-bit route across a Wn-bit model of the entire routing arrangement of Figure 15 is to be implemented, the model must be used to determine the actual memory contents to control the routing circuits. The method for determining the memory contents is to convert the routing unit functionality needed for the route into instructions or memory contents for the routing models and units respectively that comprise the larger modelled units. This method is applied recursively until the full memory contents needed to implement the route in the physical circuit have been derived.

For example, if a route from 13b to XX is to be implemented. This will be converted to the memory contents needed to implement a straight connection in routing unit 10 and a straight connection through routing model 10'. The straight connection through 10' will further be converted to the memory contents needed to implement a straight connection in each routing unit 20 and a straight connection through routing model 20'. Finally, the straight connection through routing model 20' will be converted to the memory contents needed to implement a straight connection in each routing unit 30.

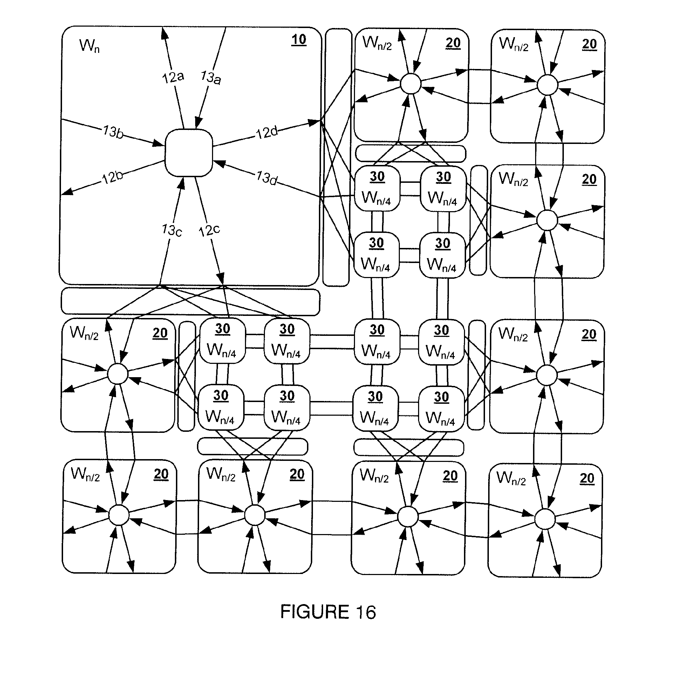

Figure 16 represents a routing network in accordance with the present invention. As is clear from Figure 16, a routing network in accordance with the present invention can have any number of routing areas, each having a different bit width.

**Claims**

1. A routing network comprising:

   routing regions of different bit-widths, each region having at least one border section, each border section having a specific number of bits per unit length, the regions arranged such that the number of bits per unit length at adjacent border sections of adjacent regions is equal; and mediator units positioned between adjacent border sections of regions having different widths, the mediator units being arranged to connect the bits of one region to the bits of another region.

2. The routing network of claim 1, wherein all the routing regions a situated on a single routing plane.

3. The routing network of claim 1, wherein routing regions of different width are located on different routing planes.

4. The routing network of any of the preceding claims, wherein the widths of the routing regions have at least two common multiplying factors.

5. A method of routing in a routing network, the routing network comprising regions of different bit width, each region comprising a plurality of routing units, the method comprising the steps of:

   extracting at least one model of an n-bit wide routing unit from a plurality of m-bit wide routing units, where n and m are positive integers and n is larger than m; calculating the routes using a known routing algorithm; converting the calculated routes into a set of instructions using the models extracted in the extracting step; and

   sending the instructions to the m-bit wide routing units.

6. The method of claim 5, wherein n is a multiple of m.

7. The method of any of any of claims 5 or 6, wherein all the regions are laid out in a single routing plane.

8. The method of any of claims 5 to 7, wherein the extracting and the converting steps are performed recursively such that high level models can be extracted from sets of lower level models, and low level routing units can be controlled using instructions created for higher level models.

9. A router for routing in a routing network, the routing network comprising regions of different bit width, each region comprising a plurality of routing units, the router comprising:

   extracting means arranged to extract at least one model of an n-bit wide routing unit from a plurality of m-bit wide routing units, where n and m are positive integers and n is larger than m; calculating means arranged to calculate the routes using a known routing algorithm; converting means arranged to convert the calculated routes into a set of instructions using the models extracted in the extracting step; and sending means arranged to send the instructions to the m-bit wide routing units.

10. The router of claim 9, wherein n is a multiple of m.

11. The router of any of claims 9 and 10, wherein all the regions are laid out in a single routing plane.

12. The router of any of claims 9 to 11, wherein the extracting means and the converting means are further arranged to recursively extract models and convert models into instructions, such that high level models can be extracted from sets of lower level models, and low level routing units can be controlled using instructions created for higher level models.

13. A method of building a routing network having regions of different bit-widths, each region having at least one border section, each border section having a specific number of bits per unit length, the method comprising the steps of:

   providing a plurality of regions arranged such that the number of bits per unit length at the adjacent border sections of adjacent regions is equal; and providing mediator units between common border sections of regions having different widths, the mediator units being arrange to connect the bits of one region to the bits of another region.

14. The method of claim 13, wherein the step of providing a plurality of routing regions comprises the steps of:

    providing all of the routing regions on a single plane.

15. The method of claim 13, wherein the step of providing a plurality of routing regions comprises the steps of:

    providing routing regions of different width on different planes.

FIGURE 1

FIGURE 2

FIGURE 3

| Symbol | Construct | Example illustrated with 1-bit wires |
|--------|-----------|--------------------------------------|
| ⟋ n | An n-bit wide bus comprising bits 0,1...n | Bus B of width 4 [3] [2] [1] [0] |
| B[i:j] | Subset of bits i, i+1...j of bus B | X = B[2:0] [3] [2] [1] [0] |
| {A,B} | Concatenation of buses A and B | X[7:0] = {A[3:0],B[3:0]} A[3] A[2] A[1] A[0] [7] [6] [5] [4] [3] B[3] [2] B[2] [1] B[1] [0] B[0] |

FIGURE 4

FIGURE 5

FIGURE 6

FIGURE 7

FIGURE 8

FIGURE 9

FIGURE 10

| Instruction to $W_n$ | Instructions to $W_{n/2}$ |
|---|---|
| 13b →12c | 10a(13b→12d), 10b(13b→12c), 10c(13b→12c), 10d(13a→12c) |
| 13b→12a | 10a(13b→13a), 10b(13c→13a), 10c(13b→12d), 10d(13b→13a) |
| 13a→12b | 10a(13a→12b), 10b(13a→12c), 10c(13a→12b), 10d(13d→12b) |
| 13a→12d | 10a(13a→12c), 10b(13a→12d), 10c(13a→12d), 10d(13b→12d) |
| 13d→12a | 10a(13c→12a), 10b(13d→12a), 10c(13d→12a), 10d(13d→12b) |
| 13d→12c | 10a(13d→12c), 10b(13d→12b), 10c(13a→12c), 10d(13d→12c) |
| 13c→12b | 10a(13d→12b), 10b(13c→12b), 10c(13c→12b), 10d(13c→12a) |
| 13c→12d | 10a(13c→12d), 10b(13b→12d), 10c(13c→12a), 10d(13c→12d) |
| 13a→12a | 10a(13a→12a), 10b(13a→12a) |
| 13b→12b | 10a(13b→12b), 10c(13b→12b) |
| 13c→12c | 10c(13c→12c), 10d(13c→12c) |
| 13d→12d | 10b(13d→12d), 10d(13d→12d) |
| 13a→12c | 10a(13a→12c), 10b(13a→12c), 10c(13a→12c), 10d(13a→12c) |
| 13b→12d | 10a(13b→12d), 10b(13b→12d), 10c(13b→12d), 10d(13b→12d) |
| 13c→12a | 10a(13c→12a), 10b(13c→12a), 10c(13c→12a), 10d(13c→12a) |
| 13d→12b | 10a(13d→12b), 10b(13d→12b), 10c(13d→12b), 10d(13d→12b) |

FIGURE 11

I/O (0,1)

$W_n$

10

12a  13a

13b  12d

I/O (-1,0)    I/O (1,0)

12b  13d

13c  12c

I/O (0,-1)

FIGURE 12

FIGURE 13

FIGURE 14

FIGURE 15

FIGURE 16

Europäisches
Patentamt

European
Patent Office

Office européen
des brevets

# EUROPEAN SEARCH REPORT

**Application Number**

EP 10 15 6145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/257024 A1 (RAY NICHOLAS J C [GB] ET AL RAY NICHOLAS JOHN CHARLES [GB] ET AL) 17 November 2005 (2005-11-17) * paragraphs [0002] - [0005], [0026] - [0029], [0047], [0100] - [0106], [0135] - [0138]; claims; figures 1-8 * ----- | 1-4, 13-15 | INV. G06F15/78 H04L12/56 |
| X | US 2003/009651 A1 (NAJAM ZAHID [US] ET AL JUNGCK PEDER J [US] ET AL) 9 January 2003 (2003-01-09) * paragraphs [0042], [0051], [0076] - [0078]; figure 17 * ----- | 1-4, 13-15 | |

**TECHNICAL FIELDS
SEARCHED     (IPC)**

G06F
H04L

~~The present search report has been drawn up for all claims~~

| Place of search | Date of completion of the search | Examiner |
|---|---|---|
| Munich | 22 July 2010 | Ceccarini, Giulio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

Europäisches
Patentamt

European
Patent Office

Office européen
des brevets

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 13-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 10 15 6145

The Search Division considers that the present European patent application does not comply with the
requirements of unity of invention and relates to several inventions or groups of inventions, namely:

1. claims: 1-4, 13-15

   Apparatus and method for network and mediator for regions of
   different bit-widths.
   ---

2. claims: 5-12

   Method and apparatus for routing in regions of different bit
   width.
   ---

**ANNEX TO THE EUROPEAN SEARCH REPORT
ON EUROPEAN PATENT APPLICATION NO.**

EP 10 15 6145

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2010

| Patent document cited in search report | | Publication date | Patent family member(s) | | Publication date |
|---|---|---|---|---|---|
| US 2005257024 | A1 | 17-11-2005 | NONE | | |
| US 2003009651 | A1 | 09-01-2003 | US | 2005268072 A1 | 01-12-2005 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6353841 B
- US 20020157066 A
- US 6252792 B